# EUROPEAN PATENT APPLICATION

(11) **EP 4 424 750 A1**
(43) Date of publication of application: **04.09.2024**
(21) Application number: 22887129.9
(22) Date of filing: 27.10.2022
(51) Int. Cl.: C08G 77/38, C08F 299/08, C08G 77/14, C08L 83/04, C09D 4/00, C09D 201/10

(54) **ALKALI-SOLUBLE UV-CURABLE ORGANOPOLYSILOXANE, UV-CURABLE COMPOSITION INCLUDING SAME, AND USE THEREFOR**

(30) Priority: 29.10.2021 JP 2021177746
(71) Applicant: Dow Toray Co., Ltd., Tokyo 140-8617 (JP)
(72) Inventor: LIANG, Wenbin, Ichihara-shi Chiba 299-0108 (JP); HOSOKAWA, Tomoka, Ichihara-shi Chiba 299-0108 (JP); OGAWA, Takuya, Ichihara-shi Chiba 299-0108 (JP)
(74) Representative: Murgitroyd & Company
(86) International application number: PCT/JP2022/040185
(87) International publication number: WO 2023/074804

(57) **Abstract**

[Problem]

To provide a UV-curable organopolysiloxane and a UV-curable composition containing this organopolysiloxane, that have high UV curability and good alkaline solubility, without using a multifunctional polymerizable monomer, and for which cured products thereof (cured films) have sufficiently high mechanical strength and favorable transparency.

[Resolution Means]

A UV curable organopolysiloxane and a UV-curable composition containing this organopolysiloxane having one or more monovalent functional groups having both a hydrophilic group and a UV curable group, bonded to a silicon atom in one molecule, and having solubility in aqueous alkaline solutions as an whole organopolysiloxane.

## Description

### TECHNICAL FIELD

The present invention relates to an alkaline-soluble UV-curable organopolysiloxane curable by chemical beam (actinic beam), for example, a UV or electron beam, and a UV-curable composition containing the organopolysiloxane. The curable polysiloxane of the present invention exhibits excellent lithographic performance due to the high solubility in alkaline aqueous solutions and good UV curing properties, and is suitable as an insulating material for electronic and electrical devices that require patterning, and especially for use as a coating agent for electronic and electrical devices that require patterning.

### BACKGROUND ART

Due to high heat resistance and excellent chemical stability, silicone resins have been used as coating agents, potting agents, insulating materials, and the like for electronic and electrical devices. Silicone resins are reported to include UV curable silicone compositions.

Touch panels are used in various display devices such as mobile devices, industrial equipment, car navigation systems, and the like. In order to improve detection sensitivity, electrical influence from light emitting sites such as light emitting diodes (LED) and organic light emitting devices (OLED) must be suppressed, and an insulating layer is usually placed between the light emitting part and the touchscreen. On the other hand, thin display devices such as OLEDs have a structure in which a plurality of functional thin layers are stacked. In recent years, studies have been conducted to improve the visibility of display devices by laminating insulating layers formed from acrylate polymer with a high refractive index and multifunctional polymerizable monomers, above and below the touchscreen layer. (For example, see Patent Documents 1 and 2)

On the other hand, Patent Document 3 discloses a lithographically curable composition containing a silsesquioxane having carboxyl and methacryloxy groups, a multifunctional polymerizable monomer, an inorganic filler, a polymerization initiator, and an organic solvent. The composition contains multifunctional polymerizable monomers at a concentration of 33% or more of the total curable components to improve sensitivity and adhesion of the cured material during curing.

Similarly, Patent Document 4 discloses a lithographically curable composition containing a silsesquioxane having a polymerizable double bond and a group selected from carboxy groups, carboxylic anhydride groups, and phenolic hydroxyl groups, as well as a photoinitiator and an organic solvent. However, in the present composition, there remains room for improvement with respect to the mechanical strength (especially brittleness) and transparency of thicker coatings, and compositions that contain silicon-free multifunctional polymerizable monomers at concentrations greater than 64% of the total curable components. In other words, although UV-curable compositions containing organopolysiloxanes having UV-curable and hydrophilic groups are disclosed, there is no description or suggestion of an organopolysiloxane or UV-curable composition containing such an organopolysiloxane, which have high solubility in alkaline solutions, show high UV curability without blending multifunctional polymerizable monomers, and form a transparent cured product.

### RELATED ART DOCUMENTS

### Patent Documents

[Patent Document 1] Japanese Unexamined Patent Application 2013-140229
[Patent Document 2] Japanese Unexamined Patent Application 2021-61056
[Patent Document 3] Japanese Unexamined Patent Application 2018-123234
[Patent Document 4] Japanese Unexamined Patent Application 2020-184010

### SUMMARY OF THE INVENTION

### PROBLEM TO BE SOLVED BY THE INVENTION

As described above, there is still demand for a UV-curable organopolysiloxane and a UV-curable composition containing this organopolysiloxane, that have high UV curability and good alkaline solubility, without using multifunctional polymerizable monomers, and for which cured products thereof (cured films) have sufficiently high mechanical strength and good transparency.

### MEANS FOR SOLVING THE PROBLEM

The present invention was made to solve the aforementioned problem, and provides a UV-curable organopolysiloxane having one or more monovalent functional groups having both hydrophilic and UV-curable groups on a silicon atom in one molecule, and having solubility in alkaline solutions as a whole organopolysiloxane. The UV-curable compositions containing such organopolysiloxanes have excellent applicability to substrates and alkaline solubility, and the cured products (cured films) have sufficient mechanical strength and favorable transparency without the use of multifunctional polymerizable monomers.

The present invention relates to a UV-curable organopolysiloxane and a UV-curable composition containing this polysiloxane, and the composition is cured by forming a bond by a UV-curable functional group. However, the curing method is not limited to UV irradiation, and an arbitrary method in which a UV-curable functional group can cause a curing reaction can be used. For example, electron beam irradiation may be used to cure the composition of the present invention.

The UV-curable organopolysiloxane of the present invention has one or more monovalent functional groups having both a hydrophilic group and a UV curable group, bonded to a silicon atom in one molecule, and has solubility in aqueous alkaline solutions as a whole organopolysiloxane.

The UV-curable organopolysiloxane may have one or more of one or more type of siloxane units selected from the following repeating units (1) and (2) in one molecule.

(R¹RSiO_{2/2}) (1)

(A₃SiO_{1/2}) (2)

(In the formula, R¹ is a monovalent functional group having both hydrophilic and UV-curable groups, R is a group selected from unsubstituted or fluorine substituted monovalent hydrocarbon groups, alkoxy groups, and hydroxyl groups, A is R¹ or R, and A includes at least one R¹)

The UV-curable organopolysiloxane may have (or in other words, must have) one or more of the aforementioned siloxane units (1) per molecule.

The UV-curable organopolysiloxane may further contain the following siloxane unit (3).

(R²RSiO_{2/2}) (3)

(In the formula, R² is a monovalent group having a UV-curable group and no hydrophilic group, and R is the group described above)

The hydrophilic group in the monovalent functional group in the UV-curable organopolysiloxane is preferably a group selected from carboxyl groups, hydroxyl groups, phenolic hydroxyl groups, and polyether groups.

The UV-curable group in the monovalent functional groups in the UV-curable organopolysiloxane is a group selected from epoxy groups, oxetane groups, vinylether groups, and (meth)acryloxy groups.

The UV-curable organopolysiloxane preferably has a branched organopolysiloxane expressed by average unit formula:

(B₃SiO_{1/2})ₐ(R¹RSiO_{2/2})_{b1}(R²RSiO_{2/2})_{b2}(RSiO_{3/2})_{c}(SiO_{4/2})_{d} (4)

(In the formula, R¹, R², and R are each independently the same groups as described above;
B is independently a group selected from R¹, R², and R;
a is 0 or a positive number; b1 is a number in a range 1 to 100, and b2 is a number in a range 0 to 50, and (c + d) is a positive number.)

The aforementioned value of (b1 +b2)/(a+b1+b2+c+d) in the average unit formula (4) for the UV-curable organopolysiloxane is preferably 0.1 to 0.5, inclusively.

The UV-curable organopolysiloxane preferably contains one or more of the following siloxane unit (5) in the molecule.

(RSiO_{3/2}) (5)

(In the formula, R is the same group described above.)

The monovalent functional group in the UV-curable organopolysiloxane, R¹, is preferably a group expressed by the following formula (6). 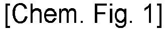 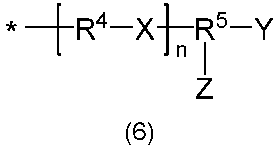
{In the formula, R⁴ is a chain divalent hydrocarbon group with 2 to 10 carbon atoms;
R⁵ is a trivalent hydrocarbon group with 3 to 10 carbon atoms in a chain, ring, or a combination thereof;
X is an oxygen atom, a sulfur atom, or -NR⁷- (where R⁷ is a hydrogen atom or a monovalent hydrocarbon group with 1 to 3 carbon atoms);
n is 0 or 1;
Y is a group containing a monovalent UV-curable group;
Z is a hydroxyl group, a hydroxyl group-containing group or a monovalent hydrophilic group expressed by -O(C=O)-R⁶-CO₂H (wherein R⁶ is a linear, branched or cyclic divalent hydrocarbon group having 2 to 12 carbon atoms that may optionally contain an oxygen atom or sulfur atom); and
* indicates a bonding site to the silicon atom on the organopolysiloxane}.

The hydrophilic group in the monovalent functional group in the UV-curable organopolysiloxane is preferably a carboxyl group and the UV-curable group is preferably a (meth)acryloxy group.

The solubility of the UV-curable organopolysiloxane in an aqueous alkaline solution is such that when the organopolysiloxane is applied to a glass plate such that the thickness after application is 4 µm, and the coating film is immersed in a 2.38 mass% solution of tetramethylammonium hydroxide (TMAH) for 1 minute and then washed with water, the mass loss of the coating film containing the organopolysiloxane is preferably 90 mass% or more, 95 mass% or more, or 98 mass% or more.

The present invention further provides a UV-curable composition containing at least the following components.
(A) the aforementioned UV-curable organopolysiloxane;
(B) a photoinitiator in an amount 0.5 to 10 parts by mass relative to 100 parts by mass of component (A); and
(C) an organic solvent.

The present invention further provides a cured product of the aforementioned UV-curable composition. Furthermore, the present invention also provides a method of using the cured product as an insulating coating layer.

The present invention further provides a display device such as a liquid crystal display, organic EL display, or organic EL flexible display that includes a layer containing a cured product of the aforementioned UV-curable composition.

### EFFECT OF THE INVENTION

The UV-curable organopolysiloxane of the present invention has favorable coatability on a substrate and demonstrates high solubility in an aqueous alkaline solution normally used in the development process performed to form a pattern of a desired shape. Therefore, unreacted and uncured organopolysiloxane and curable compositions containing this organopolysiloxane can be easily removed by a washing operation using an alkaline aqueous solution during the development process that accompanies selective UV irradiation, enabling high-precision patterning with a simple process. In addition, a cured product formed from a UV-curable composition containing the UV-curable organopolysiloxane of the present invention has an advantage of being optically transparent, being able to be designed with a wide range of hardness and other properties, and having a low dielectric constant. Therefore, the high-energy beam curable composition of the present invention is useful as a material for forming a low dielectric constant layer, especially one for electronic devices, and as a material for an insulating layer, especially as a patterning material or coating material, in any field where a material with a low dielectric constant is required.

### DESCRIPTION OF THE PREFERRED EMBODIMENTS

A configuration of the present invention will be further described in detail below.
The UV-curable organopolysiloxane of the present invention has one or more monovalent functional groups having both a hydrophilic group and a UV curable group, bonded to a silicon atom in one molecule, and has solubility in aqueous alkaline solutions as a whole organopolysiloxane (in the present invention, this is also expressed as having "alkaline solubility"). The UV-curable composition also contains (A) the organopolysiloxane of the present invention, (B) a photoinitiator, and (C) an organic solvent, as essential components.

Alkaline solubility means that the formed coating film is soluble in the alkaline solution normally used in the development process to form a pattern of a desired shape. Although basic aqueous solutions such as sodium hydroxide, potassium hydroxide, and quaternary ammonium salts are well known as alkaline solutions, aqueous solutions of tetramethylammonium hydroxide are standard, and in the present invention, the product is meant to be soluble in this alkaline solution.

More specifically, "soluble in an alkaline aqueous solution" means that when the organopolysiloxane of the present invention is coated on a glass plate to a thickness of 4 µm and then the coating film is immersed in a 2.38% aqueous solution of tetramethylammonium hydroxide (TMAH) for 1 minute and then washed with water, the mass loss of the coating film containing the organopolysiloxane will be 90 mass% or more. In particular, if the mass loss of the organopolysiloxane is 95% or more or 98% or more when evaluated by the aforementioned method, the coating film is considered to have particularly excellent solubility in alkaline aqueous solutions. Note that spin-coating or other methods are commonly used to apply the organopolysiloxane on a glass plate. If the coating is applied using an organic solvent, as described below, the organic solvent must be removed in advance by drying or other means. Furthermore, if the composition is mainly composed of organopolysiloxane, the solubility of the UV-curable composition containing the organopolysiloxane can be evaluated in an aqueous alkaline solution by the above method. Furthermore, the water washing process is generally performed by immersion in a water bath at about room temperature (25°C) or by running water at about the speed of domestic tap water for 10 to 15 seconds, so as not to adversely affect the formed patterning or the substrate.

Note that the organopolysiloxane containing one or more siloxane units selected from the repeating units (1) and (2) described above tends to be more soluble in aqueous alkaline solutions than organopolysiloxanes containing only silsesquioxane units. When the solubility of a coating film containing the organopolysiloxane in an aqueous alkaline solution is evaluated by the method described above, organopolysiloxanes having particularly excellent alkaline solubility tend to be obtained, where the mass loss rate of the coating film is 98% or more.

### [alkaline soluble UV-curable organopolysiloxane]

The UV-curable organopolysiloxane of the present invention is an organopolysiloxane having one or more monovalent functional groups bonded to a silicon atom and having both a hydrophilic group and a UV-curable group in one molecule, and having the above alkaline solubility. There is no restriction on the molecular structure as long as this object can be achieved, and the structure can be straight-chain, branched, cyclic, box-shaped, or any other type.

The UV-curable organopolysiloxane of the present invention preferably has one or more siloxane units selected from the following repeating units (1) and (2) in one molecule, particularly from the viewpoint of alkaline solubility.

(R¹RSiO_{2/2}) (1)

(A₃SiO_{1/2}) (2)

(In the formula, R¹ is a monovalent functional group having both a hydrophilic group and a UV-curable group, R is a group selected from unsubstituted or fluorine substituted monovalent hydrocarbon groups, alkoxy groups, and hydroxyl groups, A represents R¹ or R, and A contains at least one R¹)

The organopolysiloxane preferably contains the aforementioned siloxane unit (1). The presence of the siloxane units results in higher toughness and better transparency, especially with thicker coatings, as compared to a cured product containing only silsesquioxane units.

The organopolysiloxane can further contain the following siloxane unit (3). Herein, R² is a monovalent functional group having a UV-curable group and no hydrophilic group, and R is the group described above.

(R²RSiO_{2/2}) (3)

The UV-curable organopolysiloxane of the present invention has a monovalent functional group bonded to a silicon atom and having both a hydrophilic group and a UV-curable group, and the hydrophilic group in the monovalent functional group can be a group selected from carboxyl groups, hydroxyl groups, phenolic hydroxyl groups, and polyether groups. Of these, carboxyl groups are most preferred because there will be a large effect of increasing alkaline solubility.

Similarly, groups selected from epoxy groups, oxetane groups, vinylether groups, and (meth)acryloxy groups are preferably used as the UV-curable group in the monovalent functional group. Among these, epoxy groups and (meth)acryloxy groups are more preferred from the viewpoints of ease of production and availability of raw materials, and (meth)acryloxy groups are most preferred.

In one preferred embodiment, the organopolysiloxane is a branched organopolysiloxane expressed by the average unit formula (4):

(B₃SiO_{1/2})ₐ(R¹RSiO_{2/2})_{b1}(R²RSiO_{2/2})_{b2}(RSiO_{3/2})_{c}(SiO_{4/2})_{d} (4)

(In the formula, R¹, R², and R are independently the same groups as above, B is independently a group selected from R, R¹, and R², a is 0 or a positive number, b1 is a number in a range 1 to 100, b2 is a number in a range 0 to 50, and (c + d) is a positive number)

In the branched organopolysiloxane expressed by the above average unit formula (4), there is no restriction on the ratio of each structural unit, but the lower limit of the value of (b1+b2)/(a+b1+b2+c+d) is preferably 0.1 or higher, and 0.15 or higher is more preferable. On the other hand, the preferred upper limit of the value is 0.5, and values of 0.4 or less are more favorable. By setting the ratio expressed in the preceding formula to be in this range, the UV curability, alkaline solubility, and surface tack of the organopolysiloxane after application to the substrate can be properly controlled.

The branched organopolysiloxane may further have siloxane units selected from T units expressed by (RSiO_{3/2}) and Q units expressed by (SiO_{4/2}), especially siloxane T units expressed by (RSiO_{3/2}).

Specific examples of UV-curable organopolysiloxanes preferably used in the present invention can include polysiloxanes containing a combination of the following siloxy units. Herein, M represents a trimethylsiloxy unit; M^{Vi} represents a dimethylvinylsiloxy unit; M^{R1} represents a siloxane unit having a monovalent group having both a hydrophilic group and a UV-curable group and two methyl groups; D represents a dimethylsiloxy unit; D^{R1} represents a siloxane unit having both a hydrophilic group and a UV-curable group; D^{R2} represents a siloxane unit having a monovalent group and a methyl group with a UV-curable group; T represents a methylsiloxy unit; T^{R} represents an alkylsiloxy or alkenylsiloxy unit (the alkyl group is an alkyl group that may be partially fluorine substituted, such as vinyl groups, propyl groups, hexyl groups, hexenyl groups, cyclohexyl groups, and trifluoropropyl groups); T^{Ph} represents a phenylsiloxy unit; T^{R1} represents a siloxane unit having a monovalent group having both a hydrophilic group and a UV-curable group; T^{R2} represents a siloxane unit having a monovalent group having a UV-curable group; and Q represents a siloxy unit without an organic group. Note that in the example combinations below, the specific number of each siloxy unit is omitted.

Examples of preferred combinations of siloxy units included in the UV-curable organopolysiloxanes include:
M^{R1}T^{Ph}, MM^{R1}T^{Ph}, M^{Vi}M^{R1}T^{Ph}, M^{R1}DT^{Ph}, MM^{R1}DT^{Ph}, M^{Vi}M^{R1}DT^{Ph}, M^{R1}Q, MM^{R1}Q, M^{Vi}M^{R1}Q, M^{R1}DQ, MM^{R1}DQ, M^{Vi}M^{R1}DQ, M^{R1}T, MM^{R1}T, M^{Vi}M^{R1}T, MR¹TT^{R}, MM^{R1}TT^{R}, M^{Vi}M^{R1}TT^{R}, M^{R1}DT, MM^{R1}DT, M^{Vi}M^{R1}DT, M^{R1}DTT^{R}, MM^{R1}DTT^{R}, M^{Vi}M^{R1}DTT^{R}, MD^{R1}T, MD^{R1}D^{R2}T, D^{R1}T, D^{R1}D^{R2}T, D^{R1}T^{R}, D^{R1}D^{R2}T^{R}, MD^{R1}TT^{R}, MD^{R1}D^{R2}TT^{R}, MD^{R1}T^{R}, MD^{R1}D^{R2}T^{R}, D^{R1}TT^{R}, D^{R1}D^{R2}TT^{R}, MD^{R1}T^{Ph}, MD^{R1}D^{R2}T^{Ph}, D^{R1}T^{Ph}, D^{R1}D^{R2}T^{Ph}, D^{R1}T^{Ph}Q, D^{R1}D^{R2}T^{Ph}Q, MD^{R1}Q, MD^{R1}D^{R2}Q, M^{Vi}D^{R1}Q, M^{Vi}D^{R1}D^{R2}Q, MD^{R1}TQ, MD^{R1}D^{R2}TQ, MD^{R1}T^{Ph}Q, MD^{R1}D^{R2}T^{Ph}Q, MD^{R1}T^{R}Q, MD^{R1}D^{R2}T^{R}Q, MD^{R1}TT^{R}Q, MD^{R1}D^{R2}TT^{R}Q, MD^{R1}T^{R}T^{Ph}Q, MD^{R1}D^{R2}T^{R}T^{Ph}Q, MD^{R}D^{R1}TQ, D^{R}D^{R1}TQ, and D^{R}D^{R1}D^{R2}TQ.

The substitution group R in the branched organopolysiloxane is a group selected from unsubstituted or fluorine substituted monovalent hydrocarbon groups, alkoxy groups, and hydroxyl groups. The unsubstituted or fluorine-substituted monovalent hydrocarbon group is preferably a group selected from unsubstituted or fluorine substituted alkyl, cycloalkyl, arylalkyl, and aryl groups having 1 to 20 carbon atoms. Examples of the alkyl groups above include methyl, ethyl, n-propyl, isopropyl, n-butyl, tert-butyl, sec-butyl, pentyl, hexyl, octyl, and other groups, but methyl groups and hexyl groups are particularly preferable. Examples of the cycloalkyl groups above include cyclopentyl, cyclohexyl, and the like. Examples of the arylalkyl groups above include benzyl, phenylethyl groups, and the like. Examples of the aryl groups above include phenyl groups, naphthyl groups, and the like. Examples of fluorine-substituted monovalent hydrocarbon groups include 3,3,3-trifluoropropyl and 3,3,4,4,5,5,6,6,6-nonafluorohexyl groups, but 3,3,3-trifluoropropyl groups are preferable. Examples of the alkoxy groups include methoxy groups, ethoxy groups, propoxy groups, and isopropoxy groups. Note that depending on the type of substitution group R in the branched organopolysiloxane, the refractive index of the branched organopolysiloxane can be designed to be in the desired range (for example, 1.40 to 1.60). More specifically, if at least a portion of R is a monovalent hydrocarbon group substituted with fluorine, such as 3,3,3-trifluoropropyl group, the refractive index of the branched organopolysiloxane can be reduced to 1.50 or less or 1.45 or less, and it can be used as a raw material for curable compositions having a lower refractive index.

The substitution group R¹ in formula (1) or the like is a monovalent functional group bonded on a silicon atom and having both a hydrophilic group and a UV-curable group.

The monovalent functional group (in particular, the substitution group R1 described above) is preferably a group expressed by the following formula (6). 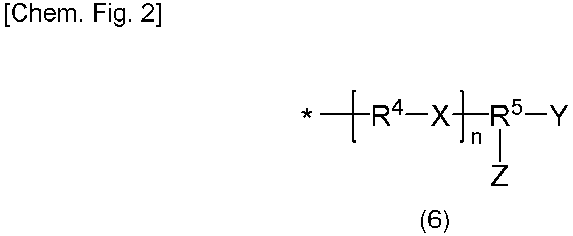 {In the formula, R⁴ is a chain divalent hydrocarbon group with 2 to 10 carbon atoms; R⁵ is a trivalent hydrocarbon group with 3 to 10 carbon atoms in a chain, ring, or a combination thereof; X is an oxygen atom, a sulfur atom, or -NR⁷- (where R⁷ is a hydrogen atom or a monovalent hydrocarbon group with 1 to 3 carbon atoms);
n is 0 or 1; Y is a group containing a monovalent UV-curable group;
Z is a hydroxyl group, a group or a monovalent hydrophilic group expressed by -O(C=O)-R₆-CO²H (wherein R⁶ is a linear, branched or cyclic divalent hydrocarbon group having 2 to 12 carbon atoms that may optionally contain an oxygen atom or sulfur atom); and * indicates a bonding site to the silicon atom on the polysiloxane}.

The linking group R⁴ is a chain divalent hydrocarbon group having 2 to 10 carbon atoms, such as ethylene, propylene, butylene, and hexylene groups, but ethylene and propylene are preferable.

The connecting group X is an oxygen atom, a sulfur atom, or an NR⁷ group, but oxygen atoms are preferably used. Furthermore, R⁷ is a hydrogen atom or a monovalent hydrocarbon group with 1 to 3 carbons.

On the other hand, the linking group R⁵ is a trivalent hydrocarbon group, or in other words, an alkane triyl group, which is a chain, a ring, or a combination thereof, with 3 to 10 carbons. Examples of linking groups that can be used include propanthryl groups, butanthryl groups, hexanthryl groups, octanthryl groups, ethylcyclohexanthryl groups, and propylcyclohexanthryl groups, but the propanthryl groups and ethylcyclohexanthryl groups of the structural formula (7) are preferred. 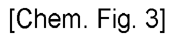 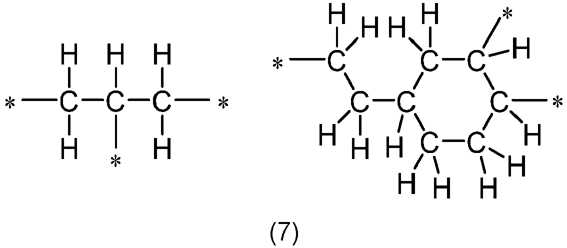 (In the formula, * indicates the binding site.)

Y is a group containing a monovalent UV-curable group. The UV-curable groups that can be used include epoxy groups, oxetane groups, vinylether groups, (meth)acryloxy groups, and the like, but a (meth)acryloxy group is a preferred UV-curable group. Thus, preferred examples of Y are acryloxy groups and methacryloxy groups.

The above Z is a hydrophilic group, preferably a hydroxyl group, a hydroxyl-containing group, or a carboxyl-containing group, and the hydroxyl-containing group may be an alcoholic hydroxyl group or phenolic hydroxyl group bonded via a divalent linking group. Furthermore, a carboxyl group expressed by -CO₂H attached via a divalent linking group is possible and preferable. Z is one or more groups selected from hydroxyl groups, hydroxyl-containing groups, or monovalent hydrophilic groups expressed by -O(C=O)-R⁶-CO₂H.

The linking group R⁶ is a divalent hydrocarbon group that may optionally contain an oxygen or sulfur atom as a heteroatom, specifically a linear, branched, or cyclic divalent hydrocarbon group with 2 to 12 carbon atoms; a sulfur-containing linear, branched, or cyclic divalent hydrocarbon group; or an oxygen-containing linear, branched, or cyclic divalent hydrocarbon group. More specifically, the divalent group is exemplified by the following structural formula (8). Of these, 6a, 6b, 6c, 6d, 6e, 6i, 6k, 6m, 6p, 6q, 6q, 6s are preferably used. 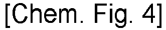 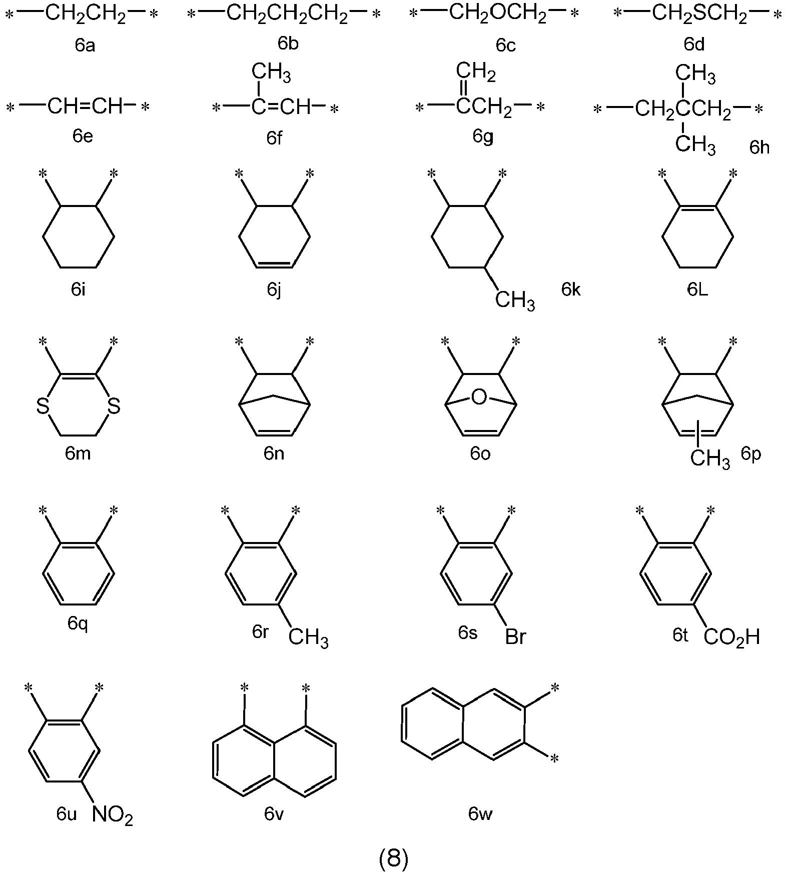 (In the formula, * indicates the binding site.)

On the other hand, substitution group R² is a monovalent group that has a UV-curable group and no hydrophilic group. The UV-curable group is preferably a group selected from epoxy groups, oxetane groups, vinylether groups, and (meth)acryloxy groups, but as described above, epoxy groups and (meth)acryloxy groups are more preferable. Thus, specific examples of R² include glycidoxyethyl groups, glycidoxypropyl groups, 2-(3,4-epoxycyclohexyl)ethyl groups, 3-(3,4-epoxycyclohexyl) propyl groups, acryloxypropyl groups, methacryloxypropyl groups, acryloxyoctyl groups, and methacryloxyoctyl groups.

It is recommended that the UV-curable organopolysiloxane of the present invention be a branched organopolysiloxane with a monovalent functional group having both a (meth)acryloxy group and a carboxyl group bonded on a silicon atom. In order to provide the organopolysiloxane with favorable UV curability and excellent alkaline solubility, an average of 2.5 or more of each monovalent functional group is preferably provided in each molecule.

As mentioned above, the UV-curable organopolysiloxane may contain a monovalent group (substitution group R²) that has a UV-curable group and no hydrophilic group. Therefore, the number of UV-curable groups and the number of hydrophilic groups in the molecule may be different. The average number of UV-curable groups in a molecule should be two or more, preferably three or more, or five or more. On the other hand, the average number of hydrophilic groups in a molecule should be two or more, preferably three or more.

Although there is no particular restriction on the molecular weight of the UV-curable organopolysiloxane of the present invention, considering the coatability and mechanical strength properties of the coated film, a weight average molecular weight of 1,000 to 100,000 or more is preferable, calculated as polystyrene by gel permeation chromatography. More preferable weight average molecular weight is preferably 1,000 to 50,000, and more preferably 2,000 to 30,000, inclusive.

There are no restrictions on the production method of the UV-curable organopolysiloxane of the present invention. Typical production methods include, but are not limited to, the following three methods: 1) produce a UV-curable organopolysiloxane and provide functional groups having a hydrophilic group; 2) produce a reactive organopolysiloxane without a hydrophilic group or a UV-curable group, and then provide a functional group with a hydrophilic group and a UV-curable group; and 3) produce an organopolysiloxane with a hydrophilic group and then provide a functional group with a UV-curable group. Here, methods 1) and 2) are preferably applicable. A specific example is the method of producing a UV-curable organopolysiloxane containing an epoxy group and converting the epoxy group to a functional group, step by step to provide a functional group with a (meth)acryloxy group and a carboxyl group.

### [UV-curable composition]

The UV-curable composition of the present invention contains the following three components. Component (A) is the main component of the present invention as described.
(A) the aforementioned UV-curable organopolysiloxane
(B) a photoinitiator, in an amount of 0.1 to 10 parts by mass relative to 100 parts by mass of component (A).
(C) an organic solvent.

### (Component (B))

Component (B) is a component that catalyzes the curing reaction of component (A) by UV light, and a group of compounds known as photoinitiators is usually applicable. If the UV-curable functional group provided by component (A) is a cationic polymerizable functional group containing an epoxy-containing group, vinyl ether group, or the like, a photocationic polymerization initiator is used as the photopolymerization initiator. Well known photocationic polymerization initiators include compounds that can generate Bronsted acids or Lewis acids by UV or electron beam irradiation, and are so-called photoacid generators, and it is known that irradiation of ultraviolet rays or the like generates an acid, which causes a reaction between cationic polymerizable functional groups. On the other hand, if the UV-curable functional group of component (A) is a radical polymerizable functional group such as a (meth)acryloxy group, a photo-radical polymerization initiator can be used as the photoinitiator. The photoradical polymerization initiator generates free radicals by irradiating ultraviolet rays, which trigger a radical polymerization reaction, to cure the composition of the present invention.

### [Photocationic polymerization initiator]

The photocationic polymerization initiator used in the UV curable composition of the present invention can be selected from any known in the technical field and is not limited to any particular one. Strong acid generating compounds, such as diazonium salts, sulfonium salts, iodonium salts, phosphonium salts, and the like, are known as photocationic polymerization initiators, and these can be used. Examples of photocationic polymerization initiators include, but are not limited to, bis(4-tert-butylphenyl)iodonium hexafluorophosphate, cyclopropyldiphenylsulfonium tetrafluoroborate, dimethylphenacylsulfonium tetrafluoroborate, diphenyliodonium hexafluorophosphate, diphenyliodonium hexafluoroarsenate, diphenyliodonium tetrafluoromethanesulfonate, 2-(3,4-dimethoxystyryl)-4,6-bis(trichloromethyl)-1,3,5-triazine, 2-[2-(furan-2-yl)vinyl]-4,6-bis(trichloromethyl)-1,3,5-triazine, 4-isopropyl-4'-methyldiphenyliodonium tetrakis(pentafluorophenyl)borate, 2-[2-(5-methylfuran-2-yl)vinyl]-4,6-bis(trichloromethyl)-1,3,5-triazine, 2-(4-methoxyphenyl)-4,6-bis(trichloromethyl)-1,3,5-triazine, 2-(4-methoxystylyl)-4,6-bis(trichloromethyl)-1,3,5-triazine, 4-nitrobenzenediazonium tetrafluoroborate, triphenylsulfonium tetrafluoroborate, triphenylsulfonium bromide, tri-p-tolylsulfonium hexafluorophosphate, tri-p-tolylsulfonium trifluoromethanesulfonate, diphenyliodonium triflate, triphenylsulfonium triflate, diphenyliodonium nitrate, bis(4-tert-butylphenyl)iodonium perfluoro-1-butane sulfonate, bis(4-tert-butylphenyl)iodonium triflate, triphenylsulfonium perfluoro-1-butanesulfonate, N-hydroxynaphthalimide triflate, p-toluene sulfonate, diphenyliodonium p-toluenesulfonate, (4-tert-butylphenyl) diphenylsulfonium triflate, tris(4-tert-butylphenyl)sulfonium triflate, N-hydroxy-5-norbornene-2,3-dicarboxymide perfluoro-1-butanesulfonate, (4-phenylthiophenyl) diphenylsulfonium triflate, 4-(phenylthio) phenyldiphenylsulfonium triethyltrifluorophosphate, and the like. In addition to the aforementioned compounds, examples of photocationic polymerization initiators can include Omnicat 250, Omnicat 270 (produced by IGM Resins B.V.), CPI-310B, IK-1 (produced by San-Apro Ltd.), DTS-200 (produced by Midori Kagaku Co., Ltd.), and Irgacure 290 (produced by BASF), and other commercially available photoinitiators.

The amount of the photocationic polymerization initiator added to the UV curable composition of the present invention is not particularly limited so long as a desired photo-curing reaction occurs, but in general, the amount is an amount of 0.1 to 10 parts by mass, preferably 0.2 to 5 parts by mass, and particularly preferably 0.5 to 5 parts by mass, relative to 100 parts by mass of component (A) of the present invention, a UV-curable alkaline soluble organopolysiloxane.

Moreover, a photosensitizer may be used in combination with the aforementioned photocationic polymerization initiator. Use of a sensitizer can increase the photon efficiency of the polymerization reaction, and is particularly effective when the coating thickness of the composition is relatively thick or when a relatively long-wavelength LED light source is used, because use of longer wavelength light for the polymerization reaction compared to only using a photopolymerization initiator is feasible. While not limited thereto, exemplary known sensitizers include anthracene-based compounds, phenothiazine-based compounds, perylene-based compounds, cyanine-based compounds, melocyanine-based compounds, coumarin-based compounds, benzylidene ketone-based compounds, and (thio)xanthene- or (thio)xanthone-based compounds such as isopropylthioxanthone, 2,4-diethylthioxanthone, alkyl-substituted anthracenes, squarylium-based compounds, (thia)pyrylium-based compounds, porphyrin-based compounds, and the like, with any photosensitizer capable of being used in the curable composition according to the present invention.

### [Photoradical polymerization initiator]

The photo-radical polymerization initiators are known to be broadly classified into photo-fragmentation and hydrogen abstraction types. However, the photo-radical polymerization initiator used in the composition of the present invention can be selected arbitrarily from those known in the technical field, and is not limited to any particular one. Examples of photoradical polymerization initiators include, but are not limited to, acetophenone, p-anisyl, benzyl, benzoin, benzophenone, 2-benzoylbenzoic acid, 4,4'-bis(diethylamino)benzophenone, 4,4'-bis(dimethylamino) benzophenone, benzoin methyl ether, benzoin isopropyl ether, benzoin isobutyl ether, benzoin ethyl ether, 4-benzoylbenzoic acid, 2,2'-bis(2-chlorophenyl)-4,4',5,5'-tetraphenyl-1,2'-biimidazole, methyl 2-benzoylbenzoate, 2-(1,3-benzodioxol-5-yl)-4,6-bis(trichloromethyl)-1,3,5-triazine, 2-benzyl-2-(dimethylamino)-4'-morpholinobutyrophenone, (±)-camphorquinone, 2-chlorothioxanthone, 4,4'-dichlorobenzophenone, 2,2-diethoxyacetophenone, 2,2-dimethoxy-2-phenylacetophenone, 2,4-diethylthioxanthene-9-one, diphenyl(2,4,6-trimethylbenzoyl)phosphine oxide, ethyl(2,4,6-trimethylbenzoyl)phenyl phosphinate, 1,4-dibenzoylbenzene, 2-ethylanthraquinone, 1-hydroxycyclohexylphenyl ketone, 2-hydroxy-2-methylpropiophenone, 2-hydroxy-4'-(2-hydroxyethoxy)-2-methylpropiophenone, 2-isopropylthioxanthone, lithium phenyl(2,4,6-trimethylbenzoyl)phosphinate, 2-methyl-4'-(methylthio)-2-morpholinopropiophenone, 2-isonitrosopropiophenone, 2-phenyl-2-(p-toluenesulfonyloxy)acetophenone, and phenylbis(2,4,6-trimethylbenzoyl)phosphine oxide, and the like. Furthermore, in addition to the aforementioned compounds, examples of the photoradical polymerization initiators can include Omnirad (registered trademark) 651, 184, 1173, 2959, 127, 907, 369, 369E, and 379EG (alkylphenone photoradical polymerization initiator, IGM Resins B.V), Omnirad (registered trademark) TPO H, TPO-L, and 819 (acyl phosphine oxide photoinitiators, IGM Resins B.V), Omnirad (registered trademark) MBF and 754 (intramolecular hydrogen extraction type photoinitiators, IGM Resins B.V.), Irgacure (registered trademark) OXE01 and OXE02 (oxime ester non-associative polymerization initiator, BASF), and the like.

The amount of the photoradical polymerization initiator added to the curable composition of the present invention is not particularly limited so long as a desired photopolymerization reaction or photo-curing reaction occurs, but in general, the amount is 0.1 to 10 parts by mass, preferably 0.5 to 5 parts by mass, relative to 100 parts by mass of component (A) of the present invention, a UV-curable alkaline-soluble organopolysiloxane.

Moreover, a photosensitizer may be used in combination with the aforementioned photoradical polymerization initiator. The use of a sensitizer can be expected to have an effect of increasing the photon efficiency of the polymerization reaction, similar to the case of where the aforementioned photocationic polymerization initiator is used. The aforementioned photosensitizers can be preferably used as examples of photosensitizers that can be used in combination with the photocationic polymerization initiators.

### [Organic solvent]

The UV-curable composition of the present invention preferably contains (C) organic solvent for the purpose of adjusting the applicability of UV-curable organopolysiloxane and the thickness of the coating film, and improving the dispersibility of the photoinitiator. As such organic solvents, organic solvents that have been conventionally blended in various UV-curable compositions can be used without any particular restrictions.

Suitable examples of the organic solvent include: (poly)alkylene glycol monoalkyl ethers such as ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, propylene glycol monoethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, and the like; (poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate (PGMEA), propylene glycol monoethyl ether acetate, and the like; other ethers such as diethylene glycol dimethyl ether, diethylene glycol methyl ethyl ether, and diethylene glycol diethyl ether; ketones such as methyl ethyl ketone, methyl isobutyl ketone, cyclohexanone, 2-heptanone, 3-heptanone, 4-heptanone, 5-methyl-3-heptanone, 2,4-dimethyl-3-pentanone, 2,6-dimethyl-4-heptanone, and the like; alkyl lactates such as methyl 2-hydroxypropionate, ethyl 2-hydroxypropionate, and the like; other esters such as ethyl 2-hydroxy-2-methylpropionate, methyl-3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanate, 3-methoxybutylacetate, 3-methyl-3-methoxybutylacetate, 3-methyl-3-methoxybutyl propionate, ethyl acetate, n-propyl acetate, i-propyl acetate, n -butyl acetate, i-butyl acetate, n-pentyl formate, i-pentyl acetate, n-butyl propionate, ethyl butyrate, n-propyl butyrate, i-propyl butyrate, n-butyl butyrate, methyl pyruvate, ethyl pyruvate, n-propyl pyruvate, methyl acetoacetate, ethyl acetoacetate, ethyl 2-oxobutanoate, and the like; aromatic hydrocarbons such as toluene, xylene, mesitylene, cumene, propylbenzene, diethylbenzene, 1,3-diisopropylbenzene, and the like; aromatic ethers such as anisole, phenethol, 2-methoxytoluene, 3-methoxytoluene, 4-methoxytoluene, 3,4-dimethoxytoluene, 1,4-bis(methoxymethyl)benzene, and the like. The organic solvent may be used alone or in combination with several organic solvents, taking into consideration the miscibility with component (A) and component (B).

The amount of organic solvent is not particularly limited, and is set appropriately based on the miscibility with (A) UV-curable organopolysiloxane, the film thickness of the coating film formed by the UV-curable composition, and the like. Typically, an amount of 50 to 10000 parts by mass per 100 parts by mass of component (A) is used. In other words, a solvent concentration of 1 to 50 mass% of UV-curable organopolysiloxane is preferred, and a range of 2 to 40 mass% is more preferred.

The cured product obtained from the UV curable composition of the present invention can be designed so that the desired physical properties of the cured product and the curing speed of the curable composition can be obtained according to the molecular structure of component (A) and the number of hydrophilic groups and UV curable groups per molecule, and according to the molecular structure and amount of component (B) added, and the viscosity of the curable composition can be designed to achieve the desired value according to the amount of component (C). Furthermore, the cured product obtained by UV curing the curable composition of the present invention is also included in the scope of the present invention. The shape of the cured product obtained from the curable composition of the present invention is not particularly limited, and it may be a thin film coating layer, may be a sheet-like molded product or the like, or may be used as a sealing material for a laminated body, display device, or the like or as an intermediate layer. The cured product obtained from the composition of the present invention is preferably in the form of a thin film coating layer, and is particularly preferably a thin film insulating coating layer.

The UV curable composition of the present invention is suitably used as a coating agent, particularly as an insulating coating agent for an electronic device or electrical device.

### [Other additives]

In addition to the aforementioned components, an additional additive may be added to the composition of the present invention if desired. Examples of additives include, but are not limited to, those described below.

### [Adhesion imparting agent]

An adhesion promoter can be added to the UV curing composition of the present invention to improve adhesion and close-fitting properties to a substrate in contact with the composition. When the curable composition of the present invention is used for applications such as coating agents, sealing materials, and the like that require adhesion or close-fitting properties to a substrate, an adhesion imparting agent is preferably added to the curable composition of the present invention. An arbitrary known adhesion promoter can be used, so long as the adhesion promoter does not interfere with a curing reaction of the composition of the present invention.

Examples of such adhesion promoters that can be used in the present invention include: organosilanes having a trialkoxysiloxy group (such as a trimethoxysiloxy group or a triethoxysiloxy group) or a trialkoxysilylalkyl group (such as a trimethoxysilylethyl group or triethoxysilylethyl groups) and a hydrosilyl group or an alkenyl group (such as a vinyl group or an allyl group), or organosiloxane oligomers having a linear structure, branched structure, or cyclic structure with approximately 4 to 20 silicon atoms; organosilanes having a trialkoxysiloxy group or a trialkoxysilylalkyl group and a methacryloxyalkyl group (such as a 3-methacryloxypropyl group), or organosiloxane oligomers having a linear structure, branched structure, or cyclic structure with approximately 4 to 20 silicon atoms; organosilanes having a trialkoxysiloxy group or a trialkoxysilylalkyl group and an epoxy group-bonded alkyl group (such as a 3-glycidoxypropyl group, a 4-glycidoxybutyl group, a 2-(3,4-epoxycyclohexyl)ethyl group, or a 3-(3,4-epoxycyclohexyl)propyl group), or organosiloxane oligomers having a linear structure, branched structure, or cyclic structure with approximately 4 to 20 silicon atoms; organic compounds having two or more trialkoxysilyl groups (such as trimethylsilyl groups or triethoxysilyl groups); and reaction products of aminoalkyltrialkoxysilane and epoxy group-bonded alkyltrialkoxysilane, and epoxide group-containing ethyl polysilicate. Specific examples thereof include vinyl trimethoxysilane, allyl trimethoxysilane, allyl triethoxysilane, hydrogen triethoxysilane, 3-glycidoxypropyl trimethoxysilane, 3-glycidoxypropyl triethoxysilane, 2-(3,4-epoxycyclohexyl)ethyl trimethoxysilane, 3-methacryloxypropyl trimethoxysilane, 3-methacryloxypropyl triethoxysilane, 1,6-bis(trimethoxysilyl)hexane, 1,6-bis(triethoxysilyl)hexane, 1,3-bis[2-(trimethoxysilyl)ethyl]-1,1,3,3-tetramethyldisiloxane, reaction products of 3-glycidoxypropyl triethoxysilane and 3-aminopropyl triethoxysilane, condensation reaction products of a methylvinyl siloxane oligomer blocked with a silanol group and a 3-glycidoxypropyl trimethoxysilane, condensation reaction products of a methylvinyl siloxane oligomer blocked with a silanol group and a 3-methacryloxypropyl triethoxysilane, and tris(3-trimethoxysilylpropyl)isocyanurate.

The amount of the adhesion promoter to be added to the UV curable composition of the present invention is not particularly limited. However, since it does not promote curing properties of the curable composition or discoloration of a cured product, the amount is preferably within a range of 0.01 to 5 parts by mass, or within a range of 0.01 to 2 parts by mass, relative to a total of 100 parts by mass of component (A).

### [Additional optional additives]

Another additive may be added to the UV curable composition of the present invention in addition to or in place of the adhesion imparting agent described above, if desired. Examples of additives that can be used include leveling agents, silane coupling agents not included in those listed above as adhesion imparting agents, UV absorbers, antioxidants, polymerization inhibitors, fillers (reinforcing fillers, insulating fillers, thermal conductive fillers, and other functional fillers), and the like. If necessary, an appropriate additive can be added to the composition of the present invention. Furthermore, a thixotropy imparting agent may also be added to the composition of the present invention if necessary, particularly when used as a sealing agent.

### [Method of Manufacturing Cured Film]

The method of producing the cured film is not limited in particular, as long as the method is capable of curing the film made of the UV-curable composition described above. Known lithographic processes can be preferably applied to produce a patterned cured film. A typical recommended manufacturing method includes:
(1) Forming a coating film of the above-mentioned UV-curable composition on the substrate;
(2) Heating the resulting coating film for a short time at a temperature of about 100°C or less to remove the solvent;
(3) Performing position-selective exposure of the coating film;
(4) Developing the exposed coating film; and
(5) Heating the patterned cured film at a temperature exceeding 100°C to fully cure the film.

The manufacturing methods mentioned above are described in detail. Various substrates can be used as the substrate, including glass substrates, silicon substrates, glass substrates coated with transparent conductive films, and the like.
Known methods for applying the UV-curable composition on a substrate use coating equipment such as spin coaters, roll coaters, bar coaters, slit coaters, and the like.
The applied curable composition is heated and dried, if necessary, to remove the solvent. Typical methods include drying on a hot plate at 80 to 120°C, preferably 90 to 100°C for 1 to 2 minutes, and leaving at room temperature for several hours, or heating in a hot air heater or infrared heater for tens of minutes to several hours. Position-selective exposure of the coating film is usually performed through a photomask or the like, using a known active energy beam light source, such as ultraviolet light sources like high-pressure mercury vapor lamps, metal halide lamps, and LED lamps, and laser light sources such as excimer laser lights. Negative or positive type photomasks can be used, depending on the properties of the curable composition. The energy dose to be irradiated depends on the structure of the curable composition, but typically ranges from 100 to 1000 mJ/cm².

Development using a developing solution is performed in order to form a pattern with the desired shape. Alkaline aqueous solutions and organic solvents are known as developer solutions, but development with an alkaline aqueous solutions is the most common. Both aqueous solutions of inorganic bases and aqueous solutions of organic bases can be used as the alkaline solution. Suitable developing solutions include basic aqueous solutions such as sodium hydroxide, potassium hydroxide, sodium carbonate, ammonia, quaternary ammonium salts, and the like. Aqueous solutions of tetramethylammonium hydroxide are particularly preferred. The developing method is not particularly limited, and for example, a dipping method, spray method, or the like can be used.

As described above, the UV-curable organopolysiloxane and UV-curable compositions mainly containing the UV-curable organopolysiloxane have excellent UV-curing properties, and also have outstanding alkaline solubility, and thus have the advantages of easy and highly accurate pattern formation, especially when the development process is carried out using an alkaline solution, as well as excellent mechanical strength and transparency of the cured film.

A post-exposure bake (PEB) is usually preferably performed on the patterned cured films after development. The PEB temperature is not limited as long as no thermal decomposition or deformation occurs in the patterned cured film, but a temperature of 150 to 250°C is preferable, and 150 to 200°C is more preferable.
The aforementioned operations can form a cured film of UV-curable composition patterned with a desired shape.

### [Application]

Specifically, the UV curable composition of the present invention is particularly useful as a material for forming an insulating layer for various articles, particularly electronic and electrical devices. The compositions can be designed to have a low dielectric constant of less than 3.0 after curing. Furthermore, the curable composition of the present invention provides favorable transparency of the cured product obtained therefrom, and is particularly suitable as a material for forming an insulating layer for touch panels, displays and other display devices. In this case, an arbitrary desired pattern may be formed as described above if necessary on the insulating layer. Therefore, a display device such as a touch panel, display, or the like containing an insulating layer obtained by curing the UV curable composition of the present invention is also an aspect of the present invention.

Furthermore, the curable composition can also be used to form an insulating coating layer (insulating film) by curing after coating an article. Therefore, the composition of the present invention can be used as an insulating coating agent. Furthermore, a cured product formed by curing the curable composition of the present invention can be used as an insulating coating layer.

An insulating film formed from the curable composition of the present invention can be used for various applications other than the aforementioned display device. In particular, use is possible as a component of an electronic device or as a material used in a process of manufacturing the electronic device. Electronic devices include semiconductor devices, magnetic recording heads, and other electronic apparatuses. For example, the curable composition of the present invention can be used in an insulating film of a semiconductor device, such as an LSI, system LSI, DRAM, SDRAM, RDRAM, D-RDRAM, or a multichip module multilayer circuit board, an interlayer insulating film for a semiconductor, an etch stopper film, a surface protection film, a buffer coat film, a passivation film in LSI, a cover coat for a flexible copper cladding plate, a solder resistant film, and a surface protection film for an optical device.

The present invention is further described below based on Examples, but the present invention is not limited to the Examples below.

### EXAMPLES

Synthesis of the UV-curable organopolysiloxane, preparation and evaluation of the UV-curable composition, and the preparation and evaluation of a cured product thereof are described in detail using examples.

### [Refractive index of UV-curable organopolysiloxane]

The refractive index (nD) of the propylene glycol methyl ether acetate (PGMEA) solution of the synthesized organopolysiloxane at 25°C was measured using a digital refractometer (RX-7000α, Atago Corporation). Solutions with various polymer concentrations were prepared and measured, and the nD of the synthesized organopolysiloxane was calculated by extrapolation.

### [Appearance of curable composition and cured product]

The curable composition and cured product were visually observed to determine the appearance.

### [Alkaline solubility of curable branched organopolysiloxane]

A 20 mass% PGMEA solution of each curable branched organopolysiloxane was spin-coated onto an optical glass substrate to a thickness of 1.0 µm, and heated (pre-baked) at 90°C for 2 minutes using a hot plate to form a coating film. The film was then developed in a 2.38% aqueous solution of tetramethylammonium hydroxide (TMAH) at 25°C for 1 minute, followed by an immersion water wash in a water bath at room temperature (25°C). The water wash time was 15 seconds. After rinsing and drying to remove water, the glass substrate was visually observed to determine the solubility (developability) in alkaline solutions using the following criteria.
A: Completely dissolved: Paint film is completely removed
B: Almost dissolved: A small amount of paint residue (scum) is observed
C: Partially dissolved: Large amount of scum (more than 20% of coating area) observed
D: Insoluble

### [High energy beam curability of curable composition]

A PGMEA solution of each curable composition (curable branched organopolysiloxane concentration: 20 mass%) was used to form a coating of the curable composition by the same method as above. The coating film was irradiated with a high-energy beam (365 nm LED light, light intensity: 500 mJ/cm²) and then heated at 150°C for 2 minutes to obtain a cured coating film. The high-energy beam curability was determined using the following criteria.
A: Cured coating is insoluble in the TMAH dissolution test
B: Only the edge portions of the cured coating (less than 5% of the total area of the cured coating) is dissolved in the TMAH dissolution test
C: Up to half of the cured coating film (about 5 to 50% of the total area of the cured film) is dissolved in the TMAH dissolution test
D: Cured coating is completely or almost completely dissolved in the TMAH dissolution test.

### [Synthesis Example 1] Synthesis of epoxy-functional branched polysiloxane (A-1)

25.0 g of 3-glycidyloxypropyl(dimethoxy)methylsilane, 67.5 g of phenyltrimethoxysilane, 100.0 g of toluene, 50.0 g of water, and 1.4 g of a 50% aqueous solution of cesium hydroxide were added to a 200-mL three-necked flask equipped with a thermometer and a nitrogen introduction tube, and stirred at 80°C for 2 hours. Azeotropic dehydration and demethanolization was performed using toluene, and then the product was concentrated to 78% solids and stirred at 115°C for another 6 hours. The solution was then allowed to stand at room temperature, and 11.6 g of an alkaline adsorbing agent (Kyoward (registered trademark) KW-700PL) was added. After stirring for 30 minutes at room temperature, the solid content was filtered to obtain a solution of epoxy-functional branched polysiloxane (A-1) with a solid content of 78%. ²⁹Si-NMR measurements showed that the ratio of epoxy-functional D structural units and phenyl-functional T structural units in the resulting polysiloxane was 24:76. Gel permeation chromatogram analysis showed that the number average molecular weight (Mn), weight average molecular weight (Mw), and polydispersity (PDI) of (A-1) were 2400, 5600, and 2.33, respectively. These analyses suggest an average of four epoxy groups per molecule of epoxy-functional branched polysiloxane.

### [Synthesis Example 2] Synthesis of epoxy-functional branched polysiloxane (A-2)

The reaction was carried out similar to Synthesis Example 1, except that 70.2 g of hexyl trimethoxysilane was used instead of 67.5 g of phenyl trimethoxysilane to obtain a solution of epoxy-functional branched polysiloxane (A-2) with a solid content of 92%. ²⁹Si-NMR measurements showed that the ratio of epoxy-functional D structural units and phenyl-functional T structural units in the resulting polysiloxane was 25:75. Gel permeation chromatogram analysis showed that the Mn, Mw, and PDI of (A-2) were 1400, 3600, and 2.57, respectively. These analyses suggest an average of 2.5 epoxy groups per molecule of epoxy-functional branched polysiloxane.

### [Synthesis Example 3] Synthesis of epoxy-functional branched polysiloxane (A-3)

The reaction was carried out similar to Synthesis Example 1 except that 30.0 g of 3-glycidyloxypropyltrimethoxysilane was used instead of 25.0 g of 3-glycidyloxypropyl(dimethoxy)methylsilane, the amount of phenyltrimethoxysilane was 75.0 g, the amount of water was 37.0 g, and the amount of a 50% aqueous solution of cesium hydroxide was 1.6 g to obtain a solution of epoxy-functional branched polysiloxane (A-3) with a solid content of 78%. ²⁹Si-NMR measurements showed that the ratio of epoxy-functional T structural units and phenyl-functional T structural units in the resulting polysiloxane was 25:75. Gel permeation chromatogram analysis showed that the Mn, Mw, and PDI of (A-3) were 5000, 12000, and 2.40, respectively. These analyses suggest an average of 9 epoxy groups per molecule of epoxy-functional branched polysiloxane.

### [Synthesis Example 4] Synthesis of epoxy-functional branched polysiloxane (A-4)

The reaction was carried out similar to Synthesis Example 1 except that the amount of 3-glycidyloxypropyl(dimethoxy)methylsilane was 24.0, the amount of trimethoxy(methyl)silane was 13.0 g, the amount of cyclohexyltrimethoxysilane was 46.8 g, the amount of toluene was 17.1 g, the amount of water was 15.0 g, the amount of dibutylhydroxytoluene was 17 mg, and the amount of a 43% aqueous solution of potassium hydroxide was 0.6 g to obtain a solution of epoxy-functional branched polysiloxane (A-4) with a solid content of 39%. ²⁹Si-NMR measurements showed that the ratio of epoxy-functional D structural units, methyl-functional T structural units, and cyclohexyl-functional T structural units in the resulting polysiloxane was 24:21:55.

### [Synthesis Example 5] Synthesis of epoxy-functional branched polysiloxane (A-5)

20.0 g of hexamethyldisiloxane, 38.0 g of trimethoxy(methyl)silane, 59.0 g of polymethoxysiloxane (MKC Silicate "MS51" by Mitsubishi Chemical), 38.2 g of toluene, 28.5 g of water, 39 mg of dibutylhydroxytoluene, and 0.164 g of trifluoroacetic acid was added, and the mixture was stirred at 80°C for 1 hour. Next, 0.610 g of a 43% aqueous solution of potassium hydroxide, 76.0 g of 3-glycidyloxypropyl(dimethoxy)methylsilane, 25.1 g of toluene, and 12.5 g of water were added, and the reaction similar to Example 1 was performed to obtain a solution of epoxy-functional branched polysiloxane (A-5) with a solid concentration of 39%. ²⁹Si-NMR measurement results showed that the ratio of M structural units in the obtained polysiloxane, epoxy-functional D structural units, methyl-functional T structural units, and Q structural units in the resulting polysiloxane was 16:26:20:38.

### [Synthesis Example 6] Synthesis of epoxy-functional branched polysiloxane (A-6)

11.0 g of hexamethyldisiloxane, 33.0 g of trimethoxy(3,3,3-trifluoropropyl)silane, 32.5 g of polymethoxysiloxane (MKC Silicate "MS51" by Mitsubishi Chemical), 20.5 g of toluene, 15.5 g of water, 26 mg of dibutylhydroxytoluene, and 0.107 g of trifluoroacetic acid was added, and the mixture was stirred at 80°C for 1 hour. Next, 0.340 g of a 43% aqueous solution of potassium hydroxide, 41.8 g of 3-glycidyloxypropyl(dimethoxy)methylsilane, 6.77 g of toluene, and 5.11 g of water were added, and the reaction similar to Example 1 was performed to obtain a solution of epoxy-functional branched polysiloxane (A-5) with a solid concentration of 36%. ²⁹Si-NMR measurement results showed that the ratio of M structural units in the obtained polysiloxane, epoxy-functional D structural units, trifluoropropyl-functional T structural units, and Q structural units in the resulting polysiloxane was 16:29:19:36.

### [Synthesis Example 7] Synthesis of epoxy-functional branched polysiloxane (A-7)

10.0 g of hexamethyldisiloxane, 11.0 g of trimethoxy(methyl)silane, 35.0 g of trimethoxy(3,3,3-trifluoropropyl)silane, 28.0 g of polymethoxysiloxane (MKC Silicate "MS51" by Mitsubishi Chemical), 72.0 g of toluene, 30.0 g of water, 30 mg of dibutylhydroxytoluene, and 0.118 g of trifluoroacetic acid was added, and the mixture was stirred at 80°C for 1 hour. Next, 0.370 g of a 43% aqueous solution of potassium hydroxide, 44.0 g of 3-glycidyloxypropyl(dimethoxy)methylsilane, 7.21 g of toluene, and 5.40 g of water were added, and the reaction similar to Example 1 was performed to obtain a solution of epoxy-functional branched polysiloxane (A-5) with a solid concentration of 44%. ²⁹Si-NMR measurement results showed that the ratio of M structural units in the obtained polysiloxane, epoxy-functional D structural units, methyl-functional T structural units, trifluoropropyl-functional T structural units, and Q structural units in the resulting polysiloxane was 13:26:10:20:31.

### [Synthesis Example 8] Synthesis of acryloxy-functional branched polysiloxane (B-1)

31.8 g of (A-1) solution, 3.6 g of acrylic acid, 11.7 mg of dibutyl hydroxytoluene, and 86.0 mg of 1,1,3,3-tetramethylguanidine was added to a 200-mL three-necked flask equipped with a thermometer and a nitrogen introduction tube, followed by stirring at 90°C for 24 hours. The reaction solution was then allowed to stand at room temperature, neutralized with a sodium bicarbonate aqueous solution, and washed with water three times. Next, propylene glycol methyl ether acetate (PGMEA) was added and solvent substitution was performed to obtain a PGMEA solution of acryloxy-functional branched polysiloxane (B-1) with a solid concentration of 50%. ¹³C-NMR measurement results of the cured product showed that the ratio of acryloxy and hydroxyl group-functional D structural units and phenyl-functional T structural units in the resulting polysiloxane was confirmed to be 24:76.

### [Synthesis Example 9] Synthesis of acryloxy-functional branched polysiloxane (B-2)

The reaction was carried out in the same manner as in Synthesis Example 4, except that 32.0 g of solution (A-2) was used instead of 31.8 g of solution (A-1), the amount of acrylic acid was set to 2.0 g, the amount of dibutylhydroxytoluene was 4.7 mg, and the amount of 1,1,3,3-tetramethylguanidine was 48.0 mg, to obtain acryloxy-functional branched polysiloxane (B-2) in PGMEA solution with a solid concentration of 50%. ¹³C-NMR measurement results of the cured product showed that the ratio of acryloxy and hydroxyl group-functional D structural units, epoxy-functional D structural units, and hexyl-functional T structural units in the resulting polysiloxane was confirmed to be 23:2:75.

### [Synthesis Example 10] Synthesis of acryloxy-functional branched polysiloxane (B-3)

The reaction was carried out similar to Synthesis Example 4 except that 44.2 g of solution (A-3) was used instead of 31.8 g of solution (A-1), the amount of acrylic acid was 5.4 g, the amount of dibutylhydroxytoluene was 12.0 mg, and the amount of 1,1,3,3-tetramethylguanidine was 146 mg, to obtain a PGMEA solution of acryloxy-functional branched polysiloxane (B-3) with a solid concentration of 50%. ¹³C-NMR measurement results of the cured product showed that the ratio of acryloxy and hydroxyl group-functional T structural units, epoxy-functional T structural units, and phenyl-functional T structural units in the resulting polysiloxane was confirmed to be 24:1:75.

### [Synthesis Example 11] Synthesis of acryloxy-functional branched polysiloxane (B-4)

The reaction was carried out similar to Synthesis Example 8, except that 121 g of solution (A-4) was used instead of 31.8 g of solution (A-1), the amount of acrylic acid was set to 7.1 g, the amount of dibutylhydroxytoluene was 10.0 mg, and the amount of 1,1,3,3-tetramethylguanidine was 1.72 mg. However, neutralization treatment and solvent substitution were not performed after the reaction, to obtain a toluene solution of acryloxy-functional branched polysiloxane (B-4) with a solid concentration of 39%. ¹³C-NMR measurement results of the cured product showed that the ratio of acryloxy and hydroxyl group-functional D structural units, epoxy-functional D structural units, methyl-functional T structural units, and cyclohexyl functional T structural units in the resulting polysiloxane was confirmed to be 22:2:21:55.

### [Synthesis Example 12] Synthesis of acryloxy-functional branched polysiloxane (B-5)

The reaction was carried out similar to Synthesis Example 11, except that 120 g of solution (A-5) was used instead of 31.8 g of solution (A-1), the amount of acrylic acid was set to 10.0 g, the amount of dibutylhydroxytoluene was 10.0 mg, and 2.04 g of tetrabutylammonium bromide was used in place of the 1.72 g of 1,1,3,3-tetramethylguanidine to obtain acryloxy-functional branched polysiloxane (B-5) in a toluene solution with a solid concentration of 39%. ¹³C-NMR measurement results of the cured product showed that the ratio of the M structural units, acryloxy and hydroxyl group-functional D structural units, epoxy-functional D structural units, methyl-functional T structural units, and Q structural units in the resulting polysiloxane was confirmed to be 16:25:1:20:38.

### [Synthesis Example 13] Synthesis of acryloxy-functional branched polysiloxane (B-6)

The reaction was carried out similar to Synthesis Example 11 except that 209 g of solution (A-6) was used instead of 31.8 g of solution (A-1), the amount of acrylic acid was 13.6 g, the amount of dibutylhydroxytoluene was 15.0 mg, and the amount of tetrabutyl ammonium bromide was 3.05 mg, to obtain a toluene solution of acryloxy-functional branched polysiloxane (B-6) with a solid concentration of 36%. ¹³C-NMR measurement results of the cured product showed that the ratio of the M structural units, acryloxy and hydroxyl group-functional D structural units, trifluoropropyl-functional T structural units, and Q structural units in the resulting polysiloxane was confirmed to be 16:29:19:36.

### [Synthesis Example 14] Synthesis of acryloxy-functional branched polysiloxane (B-7)

The reaction was carried out similar to Synthesis Example 11 except that 192 g of solution (A-7) was used instead of 31.8 g of solution (A-1), the amount of acrylic acid was 14.6 g, the amount of dibutylhydroxytoluene was 17.0 mg, and the amount of tetrabutylammonium bromide was 3.16 g, to obtain a toluene solution of acryloxy-functional branched polysiloxane (B-7) with a solid concentration of 44%. ¹³C-NMR measurement results of the cured product showed that the ratio of the M structural units, acryloxy and hydroxyl group-functional D structural units, methyl functional T structural units, trifluoropropyl-functional T structural units, and Q structural units in the resulting polysiloxane was confirmed to be 13:26:10:20:31.

### [Synthesis Example 15] Synthesis of acryloxy- and carboxyl-functional branched polysiloxane (C-1)

37.55 g of a PGMEA solution of acryloxy-functional branched polysiloxane (B-1), 1.9 g of succinic anhydride, and 31.8 mg of 1,1,3,3-tetramethylguanidine was added to a 200-mL separable flask equipped with a stirrer, thermometer, nitrogen introduction tube, and reflux tube, and then the mixture was stirred at 70°C for 3 hours. Next, the reaction solution was then allowed to stand at room temperature, and 1.0 g of alkaline adsorbing agent (Kyoward (registered trademark) KW-700PL) was added and stirred for 30 minutes. The resulting solution was filtered to a solid concentration of 46% to obtain a solution of acryloxy- and carboxyl-functional branched polysiloxane (C-1). ¹³C-NMR measurement results of the cured product showed that the ratio of acryloxy and carboxyl group-functional D structural units, acryloxy and hydroxyl group-functional D structural units, and phenyl-functional T structural units in the resulting polysiloxane was confirmed to be 22:2:76. Furthermore, the refractive index of (C-1) was 1.536.

### [Synthesis Example 16] Synthesis of acryloxy- and carboxyl-functional branched polysiloxane (C-2)

The reaction was carried out similar to Synthesis Example 7, except that 34.79 g of the PGMEA solution of (B-1) was used, 1.9 g of phthalic anhydride was used instead of 1.9 g of succinic anhydride, and the stirring time was 7 h. A PGMEA solution of the acryloxy and carboxyl-functional branched polysiloxane (C-2) with a solid concentration of 46% was obtained. ¹³C-NMR measurement results of the cured product showed that the ratio of acryloxy and carboxyl group-functional D structural units, acryloxy and hydroxyl group-functional D structural units, and phenyl-functional T structural units in the resulting polysiloxane was confirmed to be 23:1:76. Furthermore, the refractive index of (C-2) was 1.542.

### [Synthesis Example 17] Synthesis of acryloxy- and carboxyl-functional branched polysiloxane (C-3)

The reaction was carried out similar to Synthesis Example 7, except that the amount of the PGMEA solution of (B-1) was 38.78, 4.06 g of 4-nitrophthalic anhydride was used instead of 1.9 g of succinic anhydride, and the stirring time was 7 h. A PGMEA solution of the acryloxy and carboxyl-functional branched polysiloxane (C-3) with a solid concentration of 46% was obtained. ¹³C-NMR measurement results of the cured product showed that the ratio of acryloxy and carboxyl group-functional D structural units, acryloxy and hydroxyl group-functional D structural units, and phenyl-functional T structural units in the resulting polysiloxane was confirmed to be 20:4:76. Furthermore, the refractive index of (C-3) was 1.560.

### [Synthesis Example 18] Synthesis of acryloxy- and carboxyl-functional branched polysiloxane (C-4)

The reaction was carried out similar to Synthesis Example 7, except that the amount of the PGMEA solution of (B-1) was 46.60, 4.36 g of thiodiglycolic anhydride was used instead of 1.9 g of succinic anhydride, and the amount of 1,1,3,3-tetramethylguanidine was 57.0 mg. A PGMEA solution of the acryloxy and carboxyl-functional branched polysiloxane (C-4) with a solid concentration of 46% was obtained. ¹³C-NMR measurement results of the cured product showed that the ratio of acryloxy and carboxyl group-functional D structural units and phenyl-functional T structural units in the resulting polysiloxane was confirmed to be 24:76. Furthermore, the refractive index of (C-4) was 1.554.

### [Synthesis Example 19] Synthesis of acryloxy- and carboxyl-functional branched polysiloxane (C-5)

The reaction was carried out similar to Synthesis Example 7, except 41.61 g of the PGMEA solution of (B-2) was used instead of the 37.55 g of the PGMEA solution of (B-1), the amount of succinic anhydride was 2.3 g, and the amount of 1,1,3,3-tetramethylguanidine was 40.1 mg. A PGMEA solution of the acryloxy and carboxyl-functional branched polysiloxane (C-5) with a solid concentration of 46% was obtained. ¹³C-NMR measurement results of the cured product showed that the ratio of acryloxy and carboxyl group-functional D structural units, epoxy-functional D structural units, and hexyl-functional T structural units in the resulting polysiloxane was confirmed to be 23:2:75. Furthermore, the refractive index of (C-5) was 1.463.

### [Synthesis Example 20] Synthesis of acryloxy- and carboxyl-functional branched polysiloxane (C-6)

The reaction was carried out similar to Synthesis Example 7, except 40.8 g of the PGMEA solution of (B-3) was used instead of the 37.55 g of the PGMEA solution of (B-1), the amount of succinic anhydride was 2.7 g, the amount of 1,1,3,3-tetramethylguanidine was 46 mg, and the stirring time was 21 hours. A PGMEA solution of the acryloxy and carboxyl-functional branched polysiloxane (C-6) with a solid concentration of 46% was obtained. The ¹³C-NMR measurements of the products confirmed that the ratio of acryloxy- and carboxyl-functional T-structure units, epoxy-functional T-structure units, and phenyl-functional T-structure units in the resulting polysiloxanes is 24:1:75. Furthermore, the refractive index of (C-6) was 1.531.

### [Synthesis Example 21] Synthesis of acryloxy- and carboxyl-functional branched polysiloxane (C-7)

The reaction was carried out similar to Synthesis Example 15, except that 121 g of a toluene solution of (B-4) was used instead of 37.55 g of a PGMEA solution of (B-1), the amount of succinic anhydride was 4.3 g, and the stirring time was 7 hours. After the reaction was completed, PGMEA was added and solvent displacement was performed to obtain a PGMEA solution of acryloxy- and carboxyl-functional branched polysiloxane (C-7) with a solid concentration of 30%. ¹³C-NMR measurement results of the cured product showed that the ratio of acryloxy and carboxyl group-functional D structural units, acryloxy and hydroxyl group-functional D structural units, epoxy-functional D structural units, methyl-functional T structural units, and cyclohexyl functional T structural units in the resulting polysiloxane was confirmed to be 18:4:2:21:55. Furthermore, the refractive index of (C-7) was 1.478. Gel permeation chromatogram analysis showed that Mn, Mw, and PDI of (C-7) were 1060, 1540, and 1.46, respectively. The results of these analyses suggest an average of two acryloxy and one carboxyl group per molecule of acryloxy- and carboxyl-functional branched polysiloxane.

### [Synthesis Example 22] Synthesis of acryloxy- and carboxyl-functional branched polysiloxane (C-8)

The reaction was carried out similar to Synthesis Example 15, except that 120 g of a toluene solution of (B-5) was used instead of 37.55 g of a PGMEA solution of (B-1), the amount of succinic anhydride was 4.6 g, and the stirring time was 7 hours. However, a neutralization process was not performed after the reaction was completed, PGMEA was added and only solvent displacement was performed, to obtain a PGMEA solution of acryloxy- and carboxyl-functional branched polysiloxane (C-8) with a solid concentration of 30%. ¹³C-NMR measurement results of the cured product showed that the ratio of M units, acryloxy and carboxyl group-functional D structural units, acryloxy and hydroxyl group-functional D structural units, epoxy-functional D structural units, methyl-functional T structural units, and Q structural units in the resulting polysiloxane was confirmed to be 16:16:9:1:20:38. Furthermore, the refractive index of (C-8) was 1.461. Gel permeation chromatogram analysis showed that Mn, Mw, and PDI of (C-8) were 7610, 34700, and 4.55, respectively. The results of these analyses suggest an average of 14 acryloxy and 9 carboxyl group per molecule of acryloxy- and carboxyl-functional branched polysiloxane.

### [Synthesis Example 23] Synthesis of acryloxy- and carboxyl-functional branched polysiloxane (C-9)

The reaction was carried out similar to Synthesis Example 22, except that 209 g of a toluene solution of (B-6) was used instead of 37.55 g of a PGMEA solution of (B-1), the amount of succinic anhydride was 5.98 g, and the stirring time was 5 hours. However, a neutralization process was not performed after the reaction was completed, PGMEA was added and only solvent displacement was performed, to obtain a PGMEA solution of acryloxy- and carboxyl-functional branched polysiloxane (C-9) with a solid concentration of 30%. ¹³C-NMR measurement results of the cured product showed that the ratio of M structural units, acryloxy and carboxyl group-functional D structural units, acryloxy and hydroxyl group-functional D structural units, trifluoropropyl-functional T structural units, and Q structural units in the resulting polysiloxane was confirmed to be 16:19:10:19:36. Furthermore, the refractive index of (C-9) was 1.450. Gel permeation chromatogram analysis showed that Mn, Mw, and PDI of (C-9) were 4670, 6410, and 1.37, respectively. The results of these analyses suggest an average of 9 acryloxy and 6 carboxyl group per molecule of acryloxy- and carboxyl-functional branched polysiloxane.

### [Synthesis Example 24] Synthesis of acryloxy- and carboxyl-functional branched polysiloxane (C-10)

The reaction was carried out similar to Synthesis Example 22, except that 192 g of a toluene solution of (B-7) was used instead of 37.55 g of a PGMEA solution of (B-1), the amount of succinic anhydride was 8.0 g, and the stirring time was 5 hours. However, a neutralization process was not performed after the reaction was completed, PGMEA was added and only solvent displacement was performed, to obtain a PGMEA solution of acryloxy- and carboxyl-functional branched polysiloxane (C-10) with a solid concentration of 27%. ¹³C-NMR measurement results of the cured product showed that the ratio of M structural units, acryloxy and carboxyl group-functional D structural units, acryloxy and hydroxyl group-functional D structural units, methyl-functional T structural units, trifluoropropyl-functional T structural units, and Q structural units in the resulting polysiloxane was confirmed to be 13:21:5:10:20:31. Furthermore, the refractive index of (C-10) was 1.450. Gel permeation chromatogram analysis showed that Mn, Mw, and PDI of (C-10) were 5040, 7890, and 1.57, respectively. The results of these analyses suggest an average of 9 acryloxy and 7 carboxyl groups per molecule of acryloxy- and carboxyl-functional branched polysiloxane.

### [Examples and Comparative Examples]

The following functional polysiloxane solutions and curing catalysts were used to prepare each UV-curable composition by mixing the compositions shown in Table 1 (parts by mass; polysiloxane is calculated as solid content), then diluting with PGMEA to achieve an overall solid concentration of 20 mass%, and then the compositions were filtered through a membrane filter with a pore size of 0.2 µm.

### UV-curable polysiloxane

(A-1) PGMEA solution of functional polysiloxane solution obtained by solvent substitution of the functional polysiloxane solution obtained in the aforementioned synthesis example
(C-1) PGMEA solution of functional polysiloxane obtained in the above synthesis example
(C-2) PGMEA solution of functional polysiloxane obtained in the above synthesis example
(C-3) PGMEA solution of functional polysiloxane obtained in the above synthesis example
(C-4) PGMEA solution of functional polysiloxane obtained in the above synthesis example
(C-5) PGMEA solution of functional polysiloxane obtained in the above synthesis example
(C-6) PGMEA solution of functional polysiloxane obtained in the above synthesis example
(C-7) PGMEA solution of functional polysiloxane obtained in the above synthesis example
(C-8) PGMEA solution of functional polysiloxane obtained in the above synthesis example
(C-9) PGMEA solution of functional polysiloxane obtained in the above synthesis example
(C-10) PGMEA solution of functional polysiloxane obtained in the above synthesis example

### Curing catalyst

(D-1) Omnirad (registered trademark) 819 manufactured by IGM Resin
(D-2) Irgacure (registered trademark) OXE-02 manufactured by BASF
(D-3) Omnirad (registered trademark) TPO-L manufactured by IGM Resin

**[Table 1]**

| Component | Example 1 | Example 2 | Example 3 | Example 4 | Example 5 | Example 6 |
|---|---|---|---|---|---|---|
| (C-1) | 100 | | | | | |
| (C-2) | | 100 | | | | |
| (C-3) | | | 100 | | | |
| (C-4) | | | | 100 | | |
| (C-5) | | | | | 100 | |
| (C-6) | | | | | | 100 |
| (D-1) | | | | | 5 | |
| (D-2) | 3 | 5 | 5 | 3 | | 3 |
| Total | 103 | 105 | 105 | 103 | 105 | 103 |
| Appearance of curable composition | Clear | Clear | Clear | Clear | Clear | Clear |
| UV Curability | A | A | A | A | B | A |
| Appearance of cured product | Clear | Clear | Clear | Clear | Clear | Translucent |
| Alkaline solubility | A | A | A | A | A | B |

**[Table 2]**

| Component | Example 7 | Example 8 | Example 9 | Example 10 | Comparative Example 1 |
|---|---|---|---|---|---|
| (A-1) | | | | | 100 |
| (C-7) | 100 | | | | |
| (C-8) | | 100 | | | |
| (C-9) | | | 100 | | |
| (C-10) | | | | 100 | |
| (D-2) | | 1 | 2 | 1 | |
| (D-3) | 10 | | | | 5 |
| Total | 110 | 101 | 102 | 101 | 105 |
| Appearance of curable composition | Clear | Clear | Clear | Clear | Clear |
| UV Curability | A | A | A | A | A |
| Appearance of cured product | Clear | Clear | Clear | Clear | Clear |
| Alkaline solubility | A | A | A | A | C |

### [Dielectric constant of organopolysiloxane cured product (cured film)]

The curable composition of Example 1 was poured into a Teflon (registered trademark) cup with a diameter of 50 mm and dried at room temperature for 16 hours, followed by 5 hours at 50°C and another 12 hours at 90°C to form a transparent organopolysiloxane film with a thickness of 100 µm. The film test pieces were subjected to UV irradiation (365 nm LED light, 2000 mJ/cm²) and further heated in an oven at 150°C for 30 minutes to obtain a fully cured coating film.

A trace amount of silicone oil was applied to both sides of the cured material, and a tin foil piece 33 mm in diameter and 0.007 mm thick was pressed onto the surface. The capacitance at room temperature and 100 KHz was measured by an E4990A precision impedance analyzer manufactured by Keysight Technologies to which a parallel plate electrode having a diameter of 30 mm was connected. The dielectric constant was calculated to be 2.9 using the thickness of the cured product for which the electrostatic capacity was measured and the value of the electrode area.

On the other hand, a similar operation was performed using the curable composition of Example 6, which is composed mainly of UV-curable organopolysiloxane containing only silsesquioxane units, and an attempt was made to form a 100 µm thick organopolysiloxane film, but many cracks occurred on the surface and a transparent film could not be formed.

As shown in Tables 1 and 2, the coating films formed from the UV-curable organopolysiloxanes of the present invention exhibit high alkaline solubility, and in particular, the organopolysiloxanes having D structural units as well as silsesquioxane units and curable compositions containing these organopolysiloxanes (Examples 1 to 5, and 7 to 10) had particularly excellent alkaline solubility. The organopolysiloxane also had favorable UV curability. Furthermore, the cured coating film formed by UV irradiation is transparent, and in particular, the cured coating film obtained from polysiloxane having both UV-curable and hydrophilic groups in the D structural unit demonstrates high transparency and sufficient coating film toughness. By adjusting the types of structural units and functional groups constituting the branched organopolysiloxane of the present invention, it is possible to adjust the refractive index of the organopolysiloxane across a wide range, and cured materials having a desired refractive index can be designed in the curable compositions of the present invention. In particular, the branched organopolysiloxane having a trifluorofunctional structural unit has a refractive index of 1.45 or less, so the use of such a branched organopolysiloxane has the advantage that curable compositions can be designed that can form cured materials having a low refractive index. (Examples 9 and 10) On the other hand, organopolysiloxane with UV-curable groups but without a hydrophilic group (Comparative Example 1) had poor alkaline solubility and was not suitable as a patterning material.

### INDUSTRIAL APPLICABILITY

The UV-curable organopolysiloxane and UV-curable compositions mainly containing the UV-curable organopolysiloxane have excellent UV-curing properties, and also have outstanding alkaline solubility, and thus have the advantages of easy and highly accurate pattern formation, especially when the development process is carried out using an alkaline solution, as well as excellent mechanical strength and transparency of the cured film. Therefore molecular design was possible to achieve a wide range of refractive index. Therefore, the organopolysiloxanes and the like are particularly suitable as materials, especially patterning and coating materials, for forming insulating layers for touch panels and display devices such as displays, especially flexible displays.

## Claims

1. A UV-curable organopolysiloxane having one or more monovalent functional groups having both a hydrophilic group and a UV-curable group, bonded to a silicon atom in one molecule, and having solubility in aqueous alkaline solutions as a whole organopolysiloxane.

2. A UV-curable organopolysiloxane according to claim 1 having one or more of one or more type of siloxane units selected from the following repeating units (1) and (2) in one molecule.
(R¹RSiO_{2/2}) (1)
(A₃SiO_{1/2}) (2)
(In the formula, R¹ is a monovalent functional group having both hydrophilic and UV-curable groups, R is a group selected from unsubstituted or fluorine substituted monovalent hydrocarbon groups, alkoxy groups, and hydroxyl groups, A is R¹ or R, and A includes at least one R¹)

3. The UV-curable organopolysiloxane according to claim 1 or 2, having one or more siloxane units (1) per molecule.

4. The UV-curable organopolysiloxane according to any one of claims 1 to 3, further comprising the following siloxane unit (3).
(R²RSiO_{2/2}) (3)
(In the formula, R² is a monovalent functional group having a UV-curable group and no hydrophilic group, and R is the group described above)

5. The UV-curable organopolysiloxane according to any one of claims 1 to 4, wherein the hydrophilic group is a group selected from carboxyl groups, hydroxyl groups, phenolic hydroxyl groups, and polyether groups.

6. The UV-curable organopolysiloxane according to any one of claims 1 to 5, wherein the UV-curable group is a group selected from epoxy groups, oxetane groups, vinylether groups, and (meth)acryloxy groups.

7. The UV-curable organopolysiloxane according to any one of claims 1 to 6, wherein the branched organopolysiloxane is expressed by average unit formula:
(B₃SiO_{1/2})ₐ(R¹RSiO_{2/2})_{b1}(R²RSiO_{2/2})_{b2}(RSiO_{3/2})_{c}(SiO_{4/2})_{d} (4)
(In the formula, R¹, R², and R are each independently the same groups as described above;
B is independently a group selected from R¹, R², and R;
a is 0 or a positive number; b1 is a number in a range 1 to 100, and b2 is a number in a range 0 to 50, and (c + d) is a positive number.)

8. The UV-curable organopolysiloxane according to claim 7, wherein the value of (b1 + b2)/(a + b1 + b2 + c + d) in the average unit formula (4) is between 0.1 and 0.5.

9. The UV-curable organopolysiloxane according to any one of claims 1 to 8, comprising one or more of the following siloxane unit (5) in the molecule.
(RSiO_{3/2}) (5)
(In the formula, R is the same group described above.)

10. The UV-curable organopolysiloxane according to any one of claims 2 to 9, wherein R¹ is a group expressed by the following formula (6). 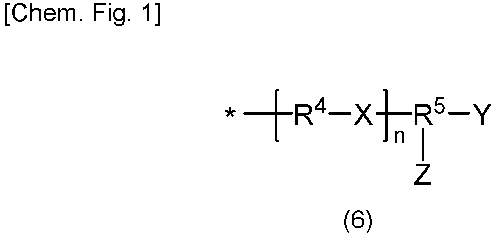
{In the formula, R⁴ is a chain divalent hydrocarbon group with 2 to 10 carbon atoms;
R⁵ is a trivalent hydrocarbon group with 3 to 10 carbon atoms in a chain, ring, or a combination thereof;
X is an oxygen atom, a sulfur atom, or -NR⁷- (where R⁷ is a hydrogen atom or a monovalent hydrocarbon group with 1 to 3 carbon atoms);
n is 0 or 1;
Y is a group containing a monovalent UV-curable group;
Z is a hydroxyl group, a hydroxyl group-containing group or a monovalent hydrophilic group expressed by -O(C=O)-R⁶-CO₂H (wherein R⁶ is a linear, branched or cyclic divalent hydrocarbon group having 2 to 12 carbon atoms that may optionally contain an oxygen atom or sulfur atom); and
* indicates a bonding site to the silicon atom on the organopolysiloxane}.

11. The UV-curable organopolysiloxane according to any one of claims 1 to 10, wherein the hydrophilic group is a carboxyl group and the UV-curable group is a (meth)acryloxy group.

12. A UV-curable organopolysiloxane according to any one of claims 1 to 11, wherein a coating film containing the organopolysiloxane has solubility in an alkaline aqueous solution with a mass loss rate of 90% or more, when the organopolysiloxane is applied on a glass plate so that the thickness after application is 4 µm and the coating film is washed after immersion in a 2.38 mass% aqueous solution of tetramethylammonium hydroxide (TMAH) for 1 minute.

13. A UV-curable composition, comprising:
(A) a UV-curable organopolysiloxane according to any one of claims 1 to 12;
(B) a photoinitiator in an amount 0.1 to 10 parts by mass relative to 100 parts by mass of component (A); and
(C) an organic solvent.

14. An insulating coating agent, comprising: the UV-curable composition according to claim 13.

15. A cured product of the UV-curable composition according to claim 13.

16. A method of using a- cured product of the UV-curable composition according to claim 13 as an insulating coating layer.

17. A display device, comprising: a layer containing a cured product of the UV-curable composition according to claim 13.
